# NEUE EUROPÄISCHE PATENTSCHRIFT

(11) **EP 0 250 749 B2**
(45) Veröffentlichungstag und Bekanntmachung des Hinweises auf die Entscheidung über den Einspruch: **08.03.1995**
(45) Hinweis auf die Patenterteilung: 06.03.1991
(21) Anmeldenummer: 87105788.1
(22) Anmeldetag: 18.04.1987
(51) Int. Cl.: F24F 13/065

(54) **Düseneinrichtung für eine Klimaanlage**
Nozzle for an air conditioning system
Buse pour un dispositif de climatisation

(30) Priorität: 14.05.1986 DE 8613078 U
(43) Veröffentlichungstag der Anmeldung: 07.01.1988
(73) Patentinhaber: Schako Metallwarenfabrik Ferdinand Schad KG, D-78600 Kolbingen (DE)
(72) Erfinder: Kurrle, Hermann, D-7201 Kolbingen (DE)
(74) Vertreter: Weiss, Peter, Dr. rer. nat.

(56) Entgegenhaltungen:
- DE-A- 3 124 876
- DE-C- 536 837
- GB-A- 1 310 493

## Beschreibung

Die Erfindung betrifft eine Düseneinrichtung für eine Klimaanlage oder dergleichen, zur Belüftung von Räumen, mit einem Einbaurahmen, der eine Abdeckplatte mit einer kreisförmigen Öffnung aufweist, und einer in dieser schwenkbar gelagerten Düse, wobei die Düse einen vergrößerten Einlaßbereich aufweist, und die Schwenkachse ein definierter Durchmesser des Einlaßbereichs und parallel zur Abdeckplatte ist und sich mit Abstand zur Rückseite der Abdeckplatte bezüglich des zu lüftenden Raumes befindet.

Eine derartige Düseneinrichtung ist aus der DE-OS 31 24 876 bekannt. Diese Düseneinrichtung weist eine in einem Einbaurahmen schwenkbar eingesetzte Düse mit einem über den größten Teil ihrer Axialerstreckung gegenüber dem Durchmesser einer Öffnung des Einbaurahmens wesentlich geringeren Durchmesser auf. Die Düse wird im Einbaurahmen gehalten, indem sie, mit einer sie teilweise umgebenden Kalotte fest verbunden ist, die in der Öffnung des Einbaurahmens gehalten ist, wobei dieser einen auf der dem zu belüftenden Raum abgewandten Seite an der Abdeckplatte angeordneten, der Kalottenform angepaßten rahmenartigen Ringflansch aufweist. Dieser Ringflansch hält die Kalotte, so daß die Düse entsprechend verschwenkt werden kann. Diese Ausgestaltung ist nicht nur aufwendig, sondern aufgrund der komplizierten Schwenklagerung der Düse anfällig, so daß es zu Störungen beim Verschwenken kommen kann. In einer Ausgestaltung ist vorgesehen, daß mehrere Düsen auf einer gemeinsamen Welle sitzen und um diese verschwenkt werden können.

Der Erfindung liegt die Aufgabe zugrunde, eine Düseneinrichtung der gattungsgemäßen Art zu schaffen, die aufgrund fertigungstechnischer und materialmäßiger vorteilhafter Ausgestaltungen vielfältigeren Einsatzmöglichkeiten zugänglich und weniger störanfällig ist.

Erfindungsgemäß wird die genannte Aufgabe bei einer Düseneinrichtung der eingangs genannten Art durch die Merkmale des Patentanspruchs 1 gelöst. Während bei der bekannten Düseneinrichtung neben Einbaurahmen und eigentlicher Düse eine zusätzliche, die Düse umgebende Kalotte, sowie gegebenenfalls ein Gegenhalterungsteil vorgesehen sein mußte, sowie der Einbaurahmen in komplizierter Weise ausgestaltet war, besteht die erfindungsgemäße Düseneinrichtung nur aus der Düse und dem Einbaurahmen. Die Düse ist daher selbst einstückig derart erweitert ausgebildet, daß die Öffnung des Einbaurahmens weitgehend abgedeckt ist, dennoch aber die Düse im hinreichenden Maße verschwenkt werden kann. Während beim Stande der Technik eine Lagerung der Kalotte direkt vorgenommen wurde, ist erfindungsgemäß vorgesehen, daß die Düse direkt im Erweiterungsbereich an zwei Punkten schwenkbar gelagert ist. Durch diese Ausgestaltung wird gegenüber den Verschwenkmöglichkeiten bei der Kalottenlagerung, die durch den Anteil der Kalotte an der gesamten Kugel beschränkt sind, ein größerer Schwenkwinkel ermöglicht, als dies bisher bei der Schwenkdüse nach dem Stand der Technik der Fall ist. Durch die größere Verschwenkungsmöglichkeit ergibt sich der Vorteil, eine wesentlich größere Fläche zu bestreichen als dies beim Stand der Technik der Fall ist. Ein weiterer Vorteil ist darin zu sehen, daß beim Erfindungsgegenstand nur ein Düsenkörper eingesetzt werden muß und die Schwenklagerung ohne Berührung der Öffnung erfolgt, während die bisher bekannten schwenkbaren Düsen zwei Körper aufweisen und daher die Gefahr bestand, daß zwischen die Körper Schwebestoffe eindrangen und sich ablagerten, so daß die Kalottenlagerung dann nicht mehr einwandfrei funktionierte.

Die Düse bildet in Grundstellung durch die Schulter und den Einlaßbereich eine die Öffnung verschließende Kalottenkontur um den Mittelpunkt der Schwenkachse. Hierdurch wird erreicht, daß trotz der einstückigen Ausbildung der gesamten Schwenkdüse und der Gewährleistung ihrer Verschwenkmöglichkeit im Einbaurahmen bei weitgehender Abdeckung der Öffnung des Einbaurahmens in sämtlichen Schwenkstellungen dennoch der eigentliche, sich konisch zu seinem vorderen Ende hin verjüngende Düsenbereich hinreichend lang ausgebildet ist, um eine ausreichende Düsenwirkung, insbesondere eine optimale Wurfweite zu erreichen. Dabei kann der konische Abschnitt in bekannter Weise in einer Ebene senkrecht zur Düsenachse in seinem vorderen Bereich einkürzbar sein, um die Düse an bei gegebenem Einblasdruck gewünschte Durchsatzmenge und/oder Rohrweite anzupassen.

Eine einfache Realisierung der Schwenklagerung ergibt sich dadurch, daß der Einlaßbereich über zwei im Einbaurahmen befestigte Schwenkhalter angelenkt ist. Dabei ist vorzugsweise vorgesehen, daß die Schwenkhalter als am Abdeckrahmen angeordnete Winkel ausgebildet sind, wobei sie entweder angeschweißt oder auch einstückig mit dem Abdeckrahmen ausgebildet sein können.

In einer einfachen Ausführung ist vorgesehen, daß der Einlaßbereich an den Schwenkhaltern durch Nieten befestigt ist.

Es ist insbesondere vorgesehen, daß der Übergang der Schulter zum Düsenabschnitt in einem Abstand zur Ebene der Abdeckplatte erfolgt, der dem Abstand der Schwenkachse zur Abdeckplatte im wesentlichen entspricht, und desweiteren, daß der Einlaßbereich im wesentlichen zylindrisch ausgebildet ist. Mit dieser Ausbildung lassen sich gute Weitwurfeigenschaften der Düse realisieren.

Gemäß weiterer Ausbildung kann vorgesehen sein, daß dem Einlaßbereich über eine zweite Schulter ein im Querschnitt gegenüber dem Einlaßbereich vergrößerter Einlaufrahmen vorgeordnet ist, wobei die zweite Schulter durch Anschlagen an der Abdeckplatte als Schwenkbegrenzung dient, sowie daß der Einlaufrahmen wenigstens ein drallerzeugendes Leitorgan aufweist. Dabei bewirkt die Schwenkbegrenzung, daß die Öffnung in jeder möglichen Schwenklage im wesentlichen durch die Düse verschlossen ist. Die durch das Drallorgan erzeugte Rotation der Förderluft wird beim Durchlaufen des konischen Düsenbereichs verstärkt, wodurch eine Reduzierung der Wurfweite gegenüber einer Ausgestaltung ohne Drallorgan erreicht wird.

Wenn nicht nur eine einmalige Einstellung der Ausrichtung der Düse vorgenommen werden soll, sondern diese nach dem Einbau in ihrer Ausrichtung verändert werden soll, bespielsweise je nach dem, ob warme oder kalte Luft zugeführt wird, so kann vorgesehen sein, daß die Düse mit einem motorischen Schwenkantrieb zum Verschwenken ihrer Schwenkachse verbunden ist. Wenn die Düse beispielswese im oberen Bereich einer Wand angeordnet wird, so kann sie beispielsweise beim Einleiten von kalter Luft in eine obere Stellung verschwenkt werden, während sie beim Zuführen von warmer Luft in eine nach unten gerichtete Stellung verschwenkt wird. In der oberen Stellung legt sich der austretende kalte Luftstrahl an der Decke an und wird von dieser geführt, bis sich die Luft soweit verteilt hat, daß sie keine Zugerscheinung im Raum mehr hervorruft. Dennoch kann bei dieser Einleitung der Luft eine hohe Durchsatzmenge und eine große Ausgangsgeschwindigkeit und damit große Wurfweite in den Raum vorgesehen werden. In der nach unten gerichteten Steilung kann erwärmte Luft unmittelbar an die gewünschte Stelle geführt werden, ohne daß es dort zu Zugerscheinungen kommt. Falls erforderlich, kann weiterhin vorgesehen sein, daß mehrere gleichartige Düsen nebeneinander in einen Kanal, beispielsweise mittels eines gemeinsamen Halterahmens eingesetzt sind.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im einzelnen erläutert ist. Dabei zeigt:
- Fig. 1: eine Schnittdarstellung durch die erfindungsgemäße Düseneinrichtung; und
- Fig. 2: eine Aufsicht von unten entsprechend den Pfeilen II-II der Figur 1, wobei aufgrund der Symmetrie nur die Hälfte der Düseneinrichtung dargestellt ist.

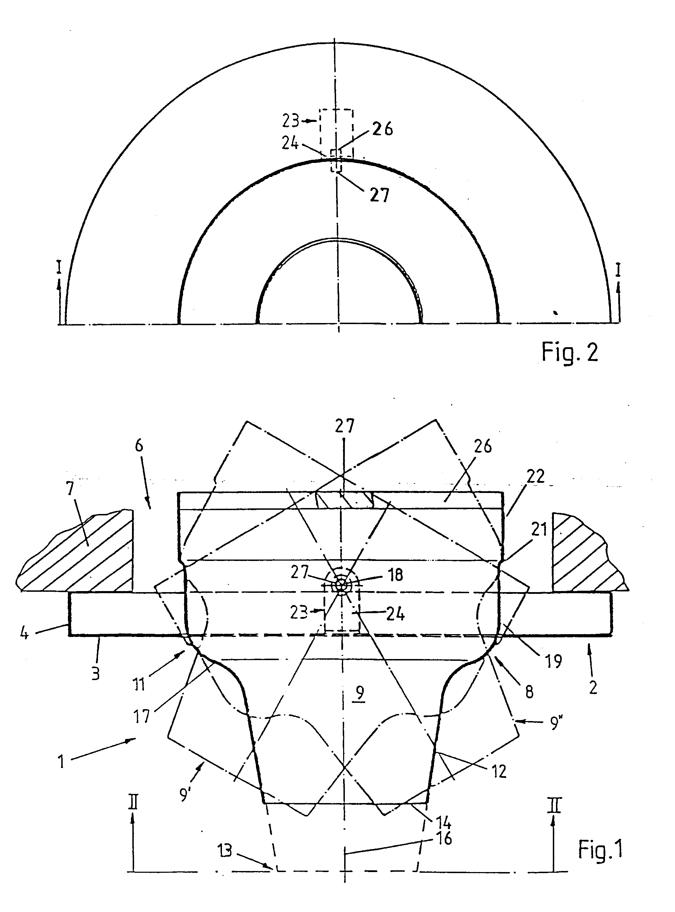

Die erfindungsgemäße Düseneinrichtung 1 weist zunächst einen Einbaurahmen 2 auf, der im dargestellten Ausführungsbeispiel kreissymmetrisch ausgebildet ist. Der Einbaurahmen 2 weist eine Abdeckplatte 3 sowie an deren Außenumfang einen Ringflansch 4 auf. Die Düseneinrichtung 1 kann mittels des genannten Einbaurahmens 2 in der aus der Figur 1 ersichtlichen Weise in einer Öffnung 6 einer Decke oder Wand 7 eingebaut werden, wobei die Winkelstellung des Einbaurahmens 2 in der Decke oder Wand 7 insbesondere bei der dargestellten Kreisform in beliebiger, geeigneter Weise gewählt werden kann.

Der Einbaurahmen 2 weist in seiner Abdeckplatte 3 eine ebenfalls kreisförmige Öffnung 8 auf. Durch diese Öffnung 8 erstreckt sich die eigentliche Düse 9. Die Düse 9 wird im wesentlichen durch einen Düsenmantel 11 aus dem gleichen Material wie der Einbaurahmen 2, vorzugsweise Metall, das lackiert werden kann, aber auch aus Kunststoff gefertigt. Der Düsenmantel 11 weist einen konischen Düsenabschnitt 12 auf, der sich zu seinem äußeren Ende 13 hin verjüngt und gegebenenfalls zur Veränderung der Durchsatzmenge und/oder der Wurfweite der Düse bei gegebenem Einblasdruck in einer Ebene 14 senkrecht zur Düsenachse 16 abgeschnitten werden kann, wie es bei der in den Figuren dargestellten Düse hinsichtlich des gestrichelt dargestellten Teils der Fall ist.

An den konischen Düsenabschnitt 12 schließt sich eine Schulter 17 an, wobei die Erweiterung gegenüber dem konischen Verlauf in der dargestellten Grundstellung etwa in einem Abstand zur Abdeckplatte 3 des Einbaurahmens 2 beginnt, der dem senkrechten Abstand des Schwenkpunktes 18 der Düse 9 relativ zum Einbaurahmen 2 im wesentlichen gleich ist. Der Durchmesser des sich erweiternden Schulterbereichs 17 in der Ebene der Abdeckplatte 3, weist ein geringes Mindermaß gegenüber dem Durchmesser der Öffnung 8 des Einbaurahmens 2 auf, das beispielsweise 1 bis 3 mm betragen kann. An die Schulter 17 schließt sich ein im wesentlichen zylindrischer Erweiterungsbereich 19 des Düsenmantels 11 an, dessen Durchmesser etwa dem Durchmesser der Öffnung 8 des Einbaurahmens 2 entspricht. Schließlich schließt sich an den Erweiterungsbereich 19 über eine zweite Schulter 21 beim dargestellten Ausführungsbeispiel ein Einlaufrahmen 22 ebenfalls konstanten Durchmessers an, der mit den genannten Düsenbereichen und -abschnitten einstückig ausgebildet ist.

Am Einbaurahmen 2 sind auf der Innenseite der Abdeckplatte 3 Winkel als Schwenkhalter 23 fest angebracht, diese sind beispielsweies bei Verwendung von Metall für Einbaurahmen und Winkel angeschweißt. Die Winkel können auch dadurch ausgebildet sein, daß bei der Herstellung des Einbaurahmens 2 beim Ausstanzen der Öffnung 8 im Öffnungsbereich Laschen stehen gelassen werden, die anschließend aus der Ebene der Abdeckplatte 3 mit ihrem Schenke 24 nach innen in den Rahmen 2 gebogen werden. Bei Kunststoff können die Winkel statt angeschweißt ebenfalls einstückig am Rahmen 2 mit angespritzt sein. Im dargestellten Ausführungsbeispiel weisen die Winkel 23 in ihrem Schenke 24 ebenso wie die Düse 9 im Erweiterungsbereich 19 diagonal gegenüberliegende Löcher 26 auf, die durch die Niete 27 hindurchtreten, mittels der die Düse 9 an der Abdeckplatte 3 um die durch die Niete 27 bestimmte Schwenkachse 18 schwenkbar angelenkt ist.

Bei Kunststoff könnte statt dieser Ausgestaltung der Schenkel 24 oder die Düse 9 Vorsprünge mit, Hinterschneidungen aufweisen, die durch an ihrer Spitze vorgesehenen, sich radial erstreckenden Nasen gebildet sind, und in ein Loch 26 des anderen Teils eingreifen, bis dessen Umfangsrand die Hinterschneidung überwindet, so daß derart die Düse 9 schwenkbar im Rahmen 2 gehalten weden kann. Aufgrund ihrer Elastizität können hierbei die Kunststoffschenkel 24 beim Zusammenbau zurückschwenken, so daß sie nach dem Eintreten der Ansätze in die Durchbrüche des anderen Teils ebenfalls wieder eng an diesen anliegen.

Die Düse kann durch die Ausgestaltung in die in der Figur 1 strichpunktiert dargestellten Stellungen 9' und 9'' verschwenkt werden, wobei aufgrund der erfindungsgemäßen Ausgestaltung der Schwenkbereich gegenüber einer Düse, die mittels eines Kalottenteils direkt in der Öffnung eines Einbaurahmens gehalten wird, bei gleicher Positionierung der fiktiven Schwenkachse größer ist, da die Kalotte zumindestens in einfacher und einstückiger Ausgestaltung nicht über eine Halbkugel hinaus ausgebildet werden kann und hierdurch ihr Schwenkbereich beschränkt ist. Darüberhinaus ist die erfindungsgemäße Ausgestaltung grundsätzlich einfacher und weniger aufwendig als bekannte Ausgestaltungen, so daß sie in vielen Fällen besser und bequemer eingesetzt werden kann, als dies bisher der Fall ist. Sie weist noch aufgrund ihrer beschriebenen Kontur und insbesondere der Ausgestaltung, daß die erweiternde Schulter 17 und der Erweiterungsbereich 19 gegenüber der Kontur einer um die Schwenkachse 18 gebildeten fiktiven Kalotte zum Rand der Öffnung 8 hin zurückversetzt ist, gute Wurfeigenschaften, insbesondere Weitwurfeigenschaften auf.

Im Einlaufrahmen 22 der Figur 1 ist ein eingesetztes drallerzeugendes Gitter 26 angedeutet, das zur Richtung der Achse 16 geneigte Leitbleche oder Stege 28 aufweist. Durch die Wahl der Neigung der Leitbleche 28 kann die Stärke und die Verdrallung des aus der Düse austretenden Luftstrahls und damit die Wurfweite in weiten Grenzen eingestellt werden.

## Patentansprüche

1. Düseneinrichtung für eine Klimaanlage od. dgl., zur Belüftung von Räumen, mit einem Einbaurahmen (2), der eine Abdeckplatte (3) mit einer kreisförmigen Öffnung (8) aufweist, und einer in dieser schwenkbar gelagerten Düse, wobei die Düse einen vergrößerten Einlaßbereich (19) aufweist, und die Schwenkachse ein definierter Durchmesser des Einlaßbereiches und parallel zur Abdeckplatte ist und sich mit Abstand zur Rückseite der Abdeckplatte (3) bezüglich des zu belüftenden Raumes befindet, wobei
der Einlaßbereich in einen Schulterbereich (17) übergeht dessen Durchmesser in der Ebene der Abdeckplatte (3) ein geringes Minder maß gegenüber dem Durchmesser der Öffnung (8) des Einbaurahmens (2) aufweist, wobei
der Einlaßbereich einstückig in eine den Querschnitt verengende Schulter (17) mit einem in Durchströmrichtung konisch zulaufenden Düsenabschnitt (12) übergeht, wobei
die Düse (9) ohne Berührung des Öffnungrandes (8) der Abdeckplatte (3) am Einlaßbereich nur in zwei Punkten (27) schwenkbar gelagert ist und wobei
der Einlaßbereich und die such anschließende Schulter (17) mit dem nachgeordneten Düsenabschnitt (12) eine in jeder Schwenkstellung die Öffnung (8) der Abdeckplatte (3) im wesentlichen verschließende Kontur aufweist.

2. Einrichtung nach Anspruch 1, dadurch gekennzeichnet, daß der Einlaßbereich (19) über zwei am Einbaurahmen (2) befestigte Schwenkhalter (23) angelenkt ist.

3. Einrichtung nach Anspruch 1, dadurch gekennzeichnet, daß die Schwenkhalter (23) als an der Abdeckplatte (3) angeordnete Winkel ausgebildet sind.

4. Einrichtung nach Anspruch 3, dadurch gekennzeichnet, daß die Winkel (23) an der Abdeckplatte (3) angeschweißt sind.

5. Einrichtung nach Anspruch 3, dadurch gekennzeichnet, daß die Winkel (23) mit der Abdeckplatte (3) einstückig ausgebildet sind.

6. Einrichtung nach einem der Ansprüche 2 bis 5, dadurch gekennzeichnet, daß der Einlaßbereich (19) an den Schwenkhaltern (23) durch Nieten (27) befestigt ist.

7. Einrichtung nach einem der vorangehenden Ansprüche, dadurch gekennzeichnet, daß der Übergang der Schulter (17) zum Düsenabschnitt (12) in einem Abstand zur Ebene der Abdeckplatte (3) erfolgt, der dem Abstand der Schwenkachse (18) zur Abdeckplatte (3) im wesentlichen entspricht

8. Einrichtung nach einem der vorangehenden Ansprüche, dadurch gekennzeichnet, daß der Einlaßbereich (19) im wesentlichen zylindrisch ausgebildet ist

9. Einrichtung nach einem der vorangehenden Ansprüche, dadurch gekennzeichnet, daß dem Einlaßbereich (19) über eine zweite Schulter (21) ein im Querschnitt gegenüber dem Einlaßbereich (19) vergrößerter Einlaufrahmen (22) vorgeordnet ist.

10. Einrichtung nach Anspruch 9, dadurch gekennzeichnet, daß der Einlaufrahmen (22) wenigstens ein drallerzeugendes Leitorgan (28) aufweist.

## Claims

1. Nozzle means for an air-conditioning plant or the like, for the ventilation of rooms, with a mounting frame (2), which has a cover plate (3) with a circular opening (8) and a nozzle pivotably mounted therein, the nozzle having an enlarged intake area (19), and the pivot axis representing a defined diameter of the intake area and is parallel to the cover plate and is spaced from the back of the cover plate (3) with regard to the room to be ventilated, whereby the intake area verges into a shoulder zone (17), the diameter of which has a smaller minimum measurement in the plane of the cover plate (3) compared to the diameter of the opening (8) of the mounting frame (2), whereby the intake area verges as a single piece into a shoulder (17) narrowing in cross-section with a nozzle portion (12) conically tapering in the flow direction, whereby the nozzle (9) is only pivotably mounted at two points (27) without contacting the edge of the opening (8) of the cover plate (3) in the intake area and whereby the intake area and the connecting shoulder (17) with the following nozzle portion (12) has a contour substantially closing the opening (8) of the cover plate (3) in each pivoting position.

2. Means according to claim 1, characterised in that the intake area (19) is articulated via two swivel holders (23) fixed to the mounting frame (2).

3. Means according to claim 1, characterised in that the swivel holders (23) are constructed as angular members located on the cover plate (3).

4. Means according to claim 3, characterised in that the angular members (23) are welded to the cover plate (3).

5. Means according to claim 3, characterised in that the angular (23) are constructed in one piece with the cover plate (3).

6. Means according to one of the claims 2 to 5, characterised in that the intake area (19) is fixed to the swivel holders (23) by rivets (27).

7. Means according to one of the preceding claims, characterised in that the transition of the shoulder (17) to the nozzle portion (12) takes place at a distance from the plane of the cover plate (3) which substantially corresponds to the distance from the pivot axis (18) to the cover plate (3).

8. Means according to one of the preceding claims, characterised in that the intake area (19) is substantially cylindrical.

9. Means according to one of the preceding claims, characterised in that the intake area (19) is preceded by a second shoulder (21) and an intake frame (22) increased in cross-section with reference to the intake area (19).

10. Means according to claim 9, characterised in that the intake frame (22) comprises at least one twist generating guide member (28).

## Revendications

1. Dispositif à buse pour une installation de climatisation ou analogue, destinée à aérer des locaux, équipé d'un cadre de montage (2), qui présente une plaque de recouvrement (3) avec une ouverture circulaire (8), et d'une buse montée dans cette dernière de façon à pouvoir basculer, la buse présentant une région d'admission agrandie (19) et l'axe de basculement étant un diamètre bien défini de la région d'admission et s'étendant parallèlement à la plaque de recouvrement, en se trouvant à une certaine distance du côté arrière de la plaque de recouvrement (3) par rapport au local à aérer, la région d'admission se raccordant à une région épaulée (17) dont le diamètre dans le plan de la plaque de recouvrement (3) présente une légère diminution par rapport au diamètre de l'ouverture (8) du cadre de montage (2), la région d'admission se raccordant d'une seule pièce, en un épaulement (17) qui rétrécit la section, à une partie de buse (12) qui va en se rétrécissant coniquement dans le sens d'écoulement, la buse (9), sans toucher le bord de l'ouverture (8) de la plaque de recouvrement (3), n'étant supportée dans la région d'admission (19) qu'en deux points (27) de façon à pouvoir basculer, et la région d'admission et l'épaulement (17) faisant suite à cette dernière avec la partie de buse (12) située en aval présentant un contour qui, dans toute position de basculement, ferme sensiblement l'ouverture (8) de la plaque de recouvrement (3).

2. Dispositif selon la revendication 1, caractérisé en ce que la région d'admission (19) est montée de façon articulée par l'intermédiaire de deux supports de basculement (23) fixés au cadre de montage (2).

3. Dispositif selon la revendication 1, caractérisé en ce que les supports de basculement (23) sont réalisés sous la forme de cornières disposées sur la plaque de recouvrement (3).

4. Dispositif selon la revendication 3, caractérisé en ce que les cornières (23) sont soudées en place sur la plaque de recouvrement (3).

5. Dispositif selon la revendication 3, caractérisé en ce que les cornières (23) sont réalisées en une pièce avec la plaque de recouvrement (3).

6. Dispositif selon l'une quelconque des revendications 2 à 5, caractérisé en ce que la région d'admission (19) est fixée aux supports de basculement (23) au moyen de rivets (27).

7. Dispositif selon l'une quelconque des revendications précédentes, caractérisé en ce que le passage de l'épaulement (17) à la partie (12) de la buse se trouve, par rapport au plan de la plaque de recouvrement (3), à une distance qui correspond sensiblement à la distance de l'axe de basculement (18) à la plaque de recouvrement (3).

8. Dispositif selon l'une quelconque des revendications précédentes, caractérisé en ce que la région d'admission (19) est réalisée sous une forme sensiblement cylindrique.

9. Dispositif selon l'une quelconque des revendications précédentes, caractérisé en ce que la région d'admission (19) est précédée, par l'intermédiaire d'un second épaulement (21), d'un cadre d'entrée (22) agrandi dans sa section par rapport à la région d'admission (19).

10. Dispositif selon la revendication 9, caractérisé en ce que le cadre d'entrée (22) présente au moins un déflecteur (28) générateur de mouvement rotatoire.
